(19) **Europäisches Patentamt European Patent Office Office européen des brevets**

(11) **EP 2 300 649 B1**

(12) **EUROPEAN PATENT SPECIFICATION**

(45) Date of publication and mention of the grant of the patent:
**02.11.2011 Bulletin 2011/44**

(51) Int Cl.:
*D02G 3/12* (2006.01)      *D02G 3/44* (2006.01)
*H05B 3/34* (2006.01)      *B60N 2/56* (2006.01)

(21) Application number: **09757496.6**

(22) Date of filing: **29.05.2009**

(86) International application number:
**PCT/EP2009/056676**

(87) International publication number:
**WO 2009/147115 (10.12.2009 Gazette 2009/50)**

(54) **ELECTRICALLY CONDUCTIVE YARN WITH REDUCED TORSIONS**

ELEKTRISCH LEITFÄHIGES GARN MIT VERMINDERTEN TORSIONEN

FIL ÉLECTRIQUEMENT CONDUCTEUR À TORSIONS RÉDUITES

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **06.06.2008 EP 08157728**
**06.06.2008 EP 08157727**

(43) Date of publication of application:
**30.03.2011 Bulletin 2011/13**

(73) Proprietor: **NV Bekaert SA**
**8550 Zwevegem (BE)**

(72) Inventors:
• **DE GREVE, Kris**
**B-8800 Roeselare (BE)**

• **AMILS, Xavier**
**B-8550 Zwevegem (BE)**
• **VERSTRAETEN, Steve**
**B-2018 Antwerpen (BE)**
• **SPELEERS, Pol**
**B-8790 Waregem (BE)**

(74) Representative: **Messely, Marc**
**NV Bekaert SA**
**D.I.E.**
**Bekaertstraat 2**
**8550 Zwevegem (BE)**

(56) References cited:
**EP-A- 0 243 504      EP-A- 1 362 941**
**EP-A- 1 722 017      US-A1- 2004 147 193**

## Description

Technical Field

The present invention relates to an electrically conductive yarn comprising one or more bundles of metal fibres and to its various uses.

Background Art

Yarns comprising one or more bundles of metal fibres are known. Such yarns are e.g. applied in vehicle seat heating systems or heatable textiles. In these applications, the yarns are used as an electrical resistance and provided, in use, with an electric current to obtain the required heating effect. In many of the applications of such yarns, the yarns are subjected to different stress and/or strain conditions. In particular, the yarns may be repeatedly loaded under tensile and/or bending or torsion stresses, e.g. when applied in a car seat heating. When repeatedly subjected to such stresses, metal fibres of the yarn may break, eventually resulting in the failure of the yarn. As a result, the yarn may no longer provide its function as a heating element in e.g. a car seat heating.

Disclosure of Invention

In general, there is a desire to increase the life time of systems or components. In case of the application of yarns comprising bundles of metal fibres, the life time of the yarn is affected by its resistance against repeated bending, which is generally called the flexlife. Therefore, in order to improve the life time of yarns comprising one or more bundles of metal fibres, it is an object of the present invention to design a yarn having an improved resistance against bending and/or fretting and/or wear, which improved resistance is called an improved flexlife. Within the meaning of the present invention, flexlife is to be understood as "the resistance to rupture of the yarn under repetitive bending conditions".

According to the invention, this object is achieved by an electrically conductive yarn comprising one or more bundles, each bundle comprising at least thirty metal fibres, said metal fibres being single-drawn or bundle-drawn, said metal fibres comprising stainless steel and a metal which is electrically more conductive than stainless steel, such as e.g. copper or a copper alloy, said yarn comprising a predetermined number of torsions per meter, characterized in that said predetermined number of torsions per meter is smaller than 80 per meter and larger than 10 per meter.

Examples of a metal "which is electrically more conductive than stainless steel" are e.g. copper, aluminium, nickel, silver, gold or any alloy thereof.

The metal fibres are single drawn or bundle drawn. For a single drawn fibre the diameter reduction is done by means of a series of dies for one fibre. For bundle drawn fibres the diameter reduction is done by means of a single series of dies for the whole bundle, as e.g. described in US3379000, US 3394213, US2050298 or US3277564. In case of the bundle drawing operation, the cross section of a fiber has usually a pentagonal or hexagonal shape as is shown in figure 2 of US2050298, and the circumference of the fiber cross section is usually serrated as opposed to a single drawn fiber, which has a circular cross section. This difference in fiber cross section resulted in the use of the term "equivalent diameter" of a fiber which is to be understood as the diameter of an imaginary circle having a surface area equal to the surface area of the radial cross section of the fiber.

US-A-2004/147193 discloses a yarn for a burner membrane comprising bundles of machined fibres while the bundles are twisted with a torsion rate in the range of 10 to 80 turns per meter. Different from single drawn or bundle drawn metal fibre, the machined fibre has a predominantly quadrilateral cross-section. Furthermore, the torsion is applied on the yarn to make the thermal energy of the fibre at the downstream side to be conducted to the colder upstream surface, and it will take good advantages of more efficient cooling and longer lifetime to the fibres. During combustion, the bundle of machined fibres will expand a little bit because of the torsion, as a result, an improved covering ratio and more equal flame distribution over the burner membrane surface can be obtained.

EP-A-1362941 discloses an electrically conductive yarn comprising stainless steel fibres which have a specific stainless steel electrical resistance and are coated with a metal coating consisting of a metal material having a specific metal coating electrical resistance being smaller than said specific stainless steel electrical resistance. The number of stainless steel fibres in the yarn can be more than thirty.

The number of torsions per meter in the present invention may vary from 10 per meter until 80 per meter, e.g. from 20 per meter until 70 per meter, e.g. from 30 per meter until 60 per meter. As used herein, the term "number of torsions" must be understood to be the amount of twist or torsion used to obtain the electrically conductive yarn, or stated otherwise, the number of turns about the axis of the yarn. In case only one bundle is present in the yarn, the number of torsions is the amount of torsion applied on this individual bundle. In case two or more bundles are present in the yarn, the number of torsions is the amount of twist used to combine the bundles into the yarn.

As such, a yarn according to the present invention encompasses the following examples:

- A yarn comprising one single bundle comprising 1000 fibres, the bundle having 50 torsions per meter.
- A yarn comprising two bundles, each comprising 275 fibres, the bundles being twisted with one another with 50 torsions per meter.

With respect to the second example, preferably the individual bundles have no torsions on their own.

It has been observed in various experiments that the number of torsions per meter as applied in a yarn comprising one or more bundles of metal fibres affects the flexlife of the yarn. More specifically, it has been observed that an important increase in flexlife is achieved when the number of torsions per meter is kept below 80.

In general, a much higher number of torsions per meter is applied in yarn in order to obtain the various elements of the yarn (i.e. the fibres in a bundle or bundles) closely together. However, as surprisingly has been observed in the present invention, this high number of torsions may adversely affect the flexlife of the yarn. As a consequence, the life expectancy of the application comprising the yarn may be reduced. By selecting the number of torsions per meter according to the present invention, an increase of the flexlife of the yarns, and consequently an increased life time of the system wherein the yarns are applied, can be realised. Examples of applications wherein the flexlife of the yarns plays an important role are e.g. the use in heating applications such as a car seat heating. In order to keep the different elements of the yarn from spreading too far apart, it has been observed that a minimum number of approx. 10 torsions per meter is sufficient.

As a matter of example only, it has been observed by experiments that in particular embodiments of the yarns according to the present invention the flexlife can be 10.000 cycles or more. The fibres as applied in yarns according to the present invention comprise multiple layers of metal and at least they comprise both stainless steel and a metal which is electrically more conductive than stainless steel, such as e.g. copper or copper alloy. By applying such a fibre, advantage can be made of the properties of both the stainless steel and the metal which is electrically more conductive than stainless steel. The fibres as applied in the yarns according to the invention thus combine the favourable strength properties of a stainless steel and the electrical resistance properties of such electrically more conductive metal such as e.g. copper.

The equivalent diameter of the individual metal fibres is typically smaller than 50 $\mu$m, e.g. smaller than 40 $\mu$m, e.g. smaller than 20 $\mu$m. The fibre diameter is typically greater than 1 $\mu$m, e.g. greater than 2 $\mu$m, e.g. greater than 6 $\mu$m. It has been observed that a reduced fibre diameter also has a positive effect on the flexlife.

The metal fiber yarn can further be coated with a suitable coating, preferably PVC, PVA, PTFE (polytetrafluoroethylene, also called Teflon) FEP (copolymers of tetrafluoromethylene and hexafluoropropylene), MFA (perfluoroalkoxy polymer) or polyurethane lacquer.

The yarn additionally can comprise a polymer elongated element, wherein the polymer elongated element is twisted with one or more bundles of metal fibres

A yarn according to the invention is advantageously used in car seat heating, but also in textile products in general or for heating applications in general.

Brief Description of Figures in the Drawings

Figure 1 schematically shows a cross-sectional view of a yarn according to the present invention;

Figures 2a and 2b schematically illustrate two possible ways of twisting multiple bundles about one another to obtain a yarn according to the present invention;

Figure 3 schematically illustrates the flexlife of a yarn as a function of the number of torsions per meter;

Figure 4 schematically illustrates the application of a yarn according to the present invention as a heating element for a car seat.

Mode(s) for Carrying Out the Invention

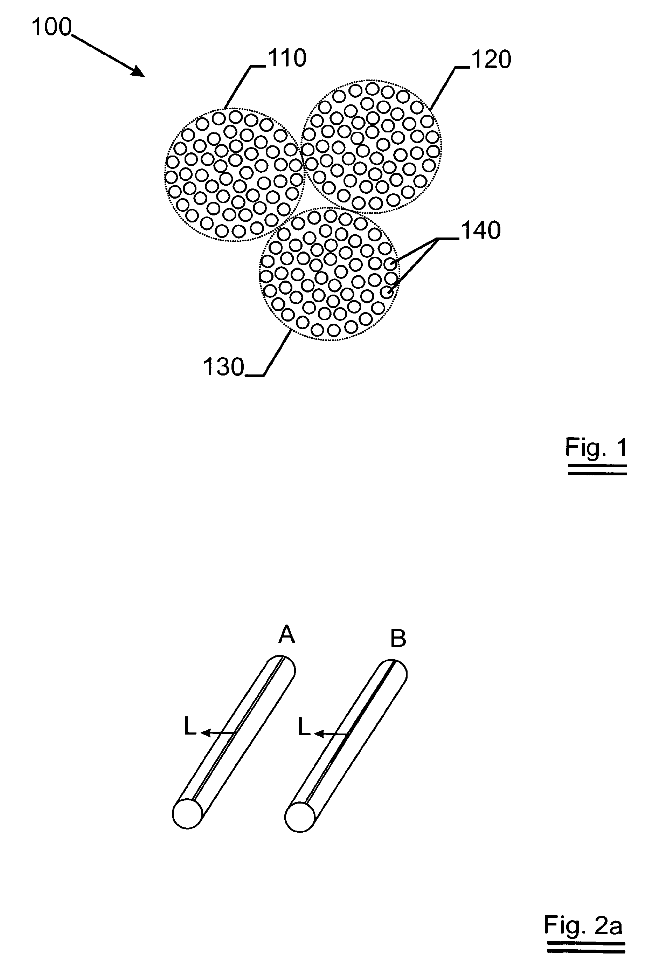

Yarns according to the present invention comprise one or more bundles of metal fibres, each bundle comprising at least 30 metal fibres. Figure 1 schematically depicts a cross-sectional view of a yarn 100 according to the present invention. The yarn 100 comprises three bundles 110, 120 and 130 each comprising more than 30 metal fibres 140.

In the present invention, metal is to be understood as encompassing both metals and metal alloys (such as stainless steel) or compositions. As an example, the metal fibres as applied in the present invention may comprise a stainless steel core enclosed by copper or a copper alloy. Alternatively, the metal fibres as applied in a yarn according to the present invention may have a copper core surrounded by a stainless steel mantle. Such fibres provide improved electrical properties combined with the corrosion and oxidation resistance of stainless steel. Said stainless steel is preferable chosen out of AISI 300 series such as AISI 302, 304, 316 or 316L, or AISI 400 series such as AISI 430, AISI 625 or AISI 904.

In accordance with the present invention, the fibres forming the bundles are either bundle-drawn fibres or single drawn fibres.

The metal fibres as applied in the yarns according to the present invention preferably have an equivalent diameter being less than 50 micrometer, but more than 0.5 micrometer, preferably between 1 micrometer and 35 micrometer, yet preferably between 7 and 21 micrometer. The equivalent diameter of a fibre is to be understood as the diameter of an imaginary circle, having the same area as the cross section of the fibre.

Preferably, the bundles of fibres as applied in the yarns according to the present invention are obtained from a bundle-drawing process. The latter process may advantageously be applied as it enables the manufacturing of thinner fibres compared to a single-drawing process. In addition, the bundle-drawing process can be considered a more economical process as it results in a plurality of fibres being obtained at the same time. With respect to bundle drawing of metal fibres, reference can be made to US 3,394,213, US 2,050,298 or US 3,277,564.

The metal fibres are twisted in some or all of said bundles, or the metal fibres are untwisted in some or all of said bundles.

The yarns according to the present invention may advantageously be applied to obtain a textile product, e.g. a braided, woven, knotted or knitted textile product.

The metal fibres as applied in the yarns according to the present invention may comprise a core of a material having a higher electric conductivity compared to steel or steel alloys. Preferred materials for forming such a core are copper or copper alloys.

When such materials are to be used for forming the metal fibres, bundles of such materials may equally be obtained by grouping a plurality of single-drawn wires or filaments, or, preferably, as in the present invention, using a bundle-drawing process, as e.g. described in JP-A-5-177243 and WO-A-2006/120045 obtaining metal fibres with multiple layers. As such, a bundle of metal fibres having a copper or copper alloy core and a mantle of e.g. stainless steel can be obtained. In a preferred embodiment, the stainless steel mantle may comprise AISI 316L steel or AISI 625 or AISI 904.

Said bundles may advantageously be applied in yarns according to the present invention for such applications where the electrical conductivity is important, such as electrical heating applications. Such applications can e.g. include heatable textiles wherein the electrically conductive yarn functions as a resistive heating element. Such textiles can e.g. be part of a heating device which is integrated in a car seat, usually between a foamed part of the seat and the seat upholstery.

A further application where the electrical conductivity is important and where the yarns according to the invention may advantageously be applied is the use as leadwire connecting different electronic devices to each other such as batteries, PCB's or monitoring devices.

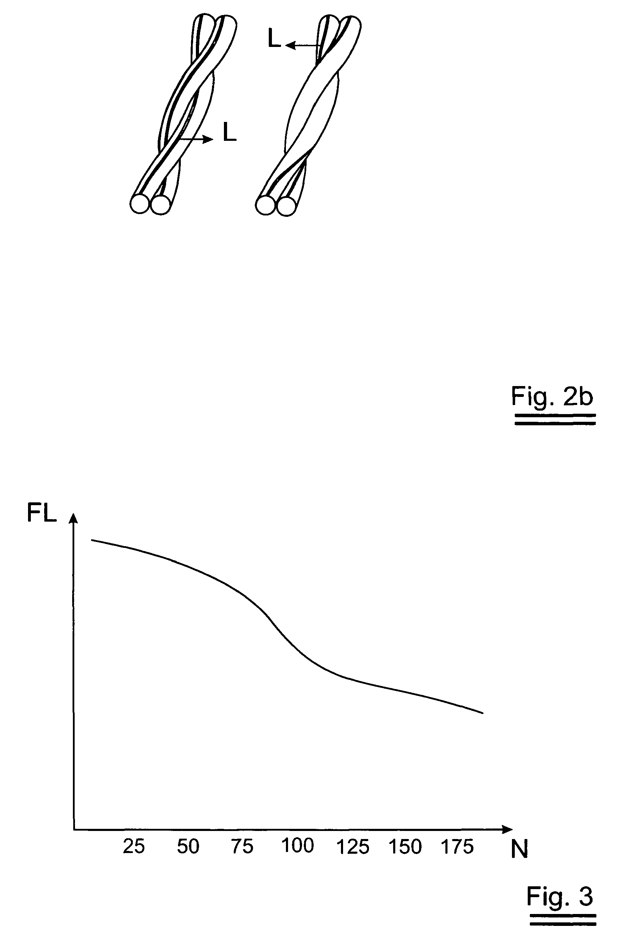

With respect to the twisting of the two or more bundles as applied in embodiments of the yarns according to the present invention, different options exist. Two options are illustrated in figures 2a and 2b.

Figure 2a schematically depicts two bundles A and B and a reference line L on the outer surface of each bundle (if the bundle is untwisted, then the reference point is a fibre L the fibre being located on the circumference of the bundle). One way of twisting the different bundles A and B is by bending the bundles about each other, substantially without applying any torsion on the individual bundles. As such, the twisting of the two or more bundles does not result in a (additional) torsion of the individual bundles. This is illustrated on the left side of figure 2b. As can be seen, reference line L (or fibre L) substantially remains in the position relative to the circumference (or other fibres) of the bundle. This process is sometimes referred to as "cabling" and can be carried out by means of tubular twisting machines.

As an alternative, the bundles of the yarns can be twisted by applying a torsional force on the two or more bundles. By doing so, the individual bundles also have a torsion on their own, or get an additional torsion. This is illustrated on the right side of figure 2b. This process is sometimes refered to as "bunching" and can be carried out by double-twisting machines.

The flexlife improvement that can be obtained by yarns according to the present invention is further illustrated by the graph shown in figure 3. Figure 3 schematically indicates the flexlife FL as a function of the number of torsions per meter N. As can be seen on the graph, an important flexlife improvement is obtained when the number of torsions per meter is kept below 80. By a further reduction of the number of torsions per meter, the flexlife can be increased even further. However, as already mentioned above, in order to keep the different bundles of the yarn from spreading too far apart, it has been observed that a minimum number of approx. 10 torsions per meter should be observed. A good compromise between an improved flexlife and avoiding the bundles from spreading too far apart is found when the number of torsions per meter is between 30 and 60.

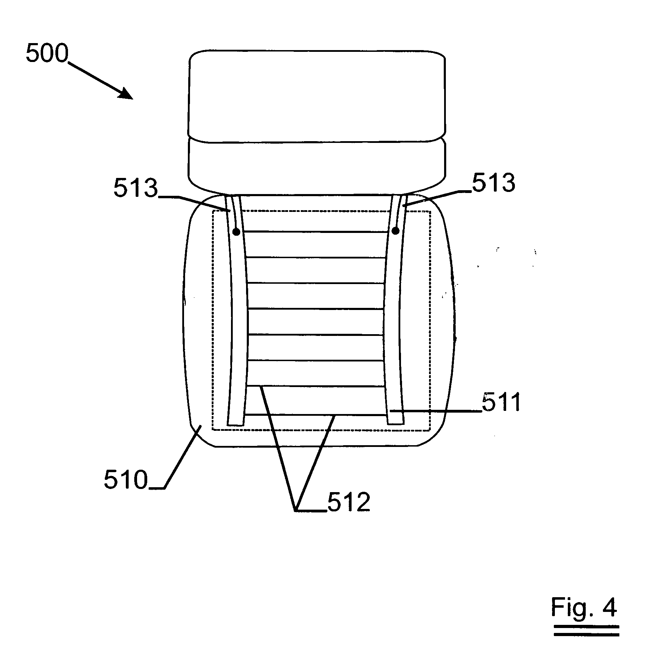

Yarns according to the present invention may advantageously be applied as a heating element for a car seat. This is illustrated in figure 4. Figure 4 schematically shows a car seat 500 provided with a textile product 510 comprising yarns in accordance with the present invention as electrical electrodes 511. Carbon wires 512 may be coupled to an electric device (not shown) that is arranged to provide, in use, the required current to the textile product by means of two cables 513, each being coupled to an electrode 511 to which the carbon wires 512 are coupled. This arrangement is called a parallel car seat heating element.

Alternatively, a serial car seat heating embodiment can be provided, where the yarns according to the present invention function as the heat resisting elements.

The improvement with respect to the flexlife that can be realised by yarns according to the invention is illustrated by the following test results.

The following table 1 shows, as an example, the experimentally determined flexlife of the following yarns. The yarns are indicated as:

wherein

a equals the equivalent diameter of the fibres,
b represents the number of bundles,
c represents the number of fibres per bundle and
d represents the number of torsions per meter.

Table 1:

| yarn | Av. # of cycles (Flexlife) | Tex | Flex Factor |
|---|---|---|---|
| 14/1X275/40 | 2702 | 340 | 7,9 |
| 14/1X275/100 | 2368 | 340 | 7,0 |
| 14/1X275/150 | 2420 | 340 | 7,1 |
| | | | |
| 14/4X90/40 | 3593 | 445 | 8,1 |
| 14/4X90/100 | 2526 | 445 | 5,7 |
| 14/4X90/150 | 1989 | 445 | 4,5 |
| 12/2X275/50 | 4800 | 499 | 9,6 |
| 12/2X275/120 | 3627 | 499 | 7,3 |
| 12/2X275/175 | 3089 | 499 | 6,2 |
| | | | |
| 12/3X275/50 | 6446 | 749 | 8,6 |
| 12/3X275/120 | 5727 | 749 | 7,6 |
| 12/3X275/175 | 5082 | 749 | 6,8 |
| | | | |
| 14/3X275/50 | 6871 | 1020 | 6,7 |
| 14/3X275/100 | 4784 | 1020 | 4,7 |
| 14/3X275/175 | 4013 | 1020 | 3,9 |

The flexlife can be determined by subjecting a sample length of a yarn to a repeated bending over a bending radius of about 0.60 mm to 0.80 mm and under an axial load. The bending degree in such a test is generally taken as 180°. During the test, a micro-current is arranged to run through the yarn sample, the yarn sample forming part of an electrical circuit. Once all fibres of the sample are broken, the electric circuit is also broken and the counting of the number of bendings is stopped.

The number of bundles times the number of fibres per bundle is larger than 250.

Flexlife must be compared for yarns having a same tex number (tex is being expressed in g/1000m). In table 1, it is clear that for yarns with approximately same tex numbers the flexlife is better for smaller diameters of fibers. The flexfactor, which is the ratio of the number of flex life cycles to the Tex of the yarn, is therefore an appropriate means for comparing the "flexlife" of a yarn. By examining the flexfactor, as in table 1, it is clear that lower torsions applied on a yarn, as well as smaller diameters of fibers in the yarn provide a better "flexlife".

Although various specific applications of the yarns according to the invention are mentioned, the present invention is in no way restricted to the applications mentioned.

**Claims**

1. An electrically conductive yarn (100) comprising one or more bundles (110, 120, 130), each bundle comprising at least thirty metal fibres (140), said metal fibres being single-drawn or bundle-drawn, said metal fibres (140) comprising stainless steel and a metal which is electrically more conductive than stainless steel, said yarn (100) comprising a predetermined number of torsions per meter, **characterized in that** said predetermined number of torsions per meter is smaller than 80 per meter and larger than 10 per meter.

2. A yarn according to claim 1, wherein the yarn comprises two or more bundles.

3. A yarn according to any preceding claim, wherein said metal which is electrically more conductive than stainless steel is copper.

4. A yarn according to claim 1, 2, or 3 wherein said predetermined number of torsions is between 30 torsions per meter and 60 torsions per meter.

5. A yarn according to any preceding claim wherein the number of bundles times the number of fibres per bundle is larger than 250.

6. A yarn according to any preceding claim, wherein said metal fibres are untwisted in some or all of said bundles.

7. A yarn according to any of claims 1 to 5, wherein said metal fibres are twisted in some or all of said bundles.

8. A yarn according to any one of the claims 1 to 7, wherein said metal fibres comprise a copper core and a stainless steel mantle.

9. A yarn according to any one of the claims 1 to 8, wherein said yarn has an isolating coating such as PTFE (Polytetrafluoroethylene).

10. A yarn according to any one of the claims 1 to 9, wherein said yarn additionally comprises a polymer elongated element, said polymer elongated element being twisted with said one or more bundles of metal fibres.

11. A heating element comprising an electrically conductive yarn as in any of the claims 1 to 10.

12. The use of an electrically conductive yarn as in any of the claims 1 to 10 as resistive heating elements in heatable textile applications.

13. The use of an electrically conductive yarn as in claim 12, wherein said heatable textile application is car seat heating.

14. The use of an electrically conductive yarn as in any of the claims 1 to 10 in a leadwire.

**Patentansprüche**

1. Elektrisch leitfähiges Garn (100), umfassend ein oder mehr Bündel (110, 120, 130), wobei jedes Bündel mindestens dreißig Metallfasern (140) umfasst, wobei die Metallfasern einzelgezogene oder bündelgezogene Fasern sind, wobei die Metallfasern (140) Edelstahl umfassen und ein Metall, das elektrisch leitfähiger ist als Edelstahl, wobei das Garn (100) eine vorausbestimmte Anzahl an Windungen pro Meter umfasst, **dadurch gekennzeichnet, dass** die vorausbestimmte Anzahl an Windungen pro Meter kleiner als 80 pro Meter und größer als 10 pro Meter ist.

2. Garn nach Anspruch 1, wobei das Garn zwei oder mehr Bündel umfasst.

3. Garn nach einem der vorhergehenden Ansprüche, wobei das Metall, das elektrisch leitfähiger ist als Edelstahl, Kupfer ist.

**4.** Garn nach Anspruch 1, 2 oder 3, wobei die vorausbestimmte Anzahl an Windungen zwischen 30 Windungen pro Meter und 60 Windungen pro Meter beträgt.

**5.** Garn nach einem der vorhergehenden Ansprüche, wobei die Anzahl Bündel multipliziert mit der Anzahl der Fasern pro Bündel größer als 250 ist.

**6.** Garn nach einem der vorhergehenden Ansprüche, wobei die Metallfasern in manchen oder allen Bündeln aufgedreht sind.

**7.** Garn nach einem der Ansprüche 1 bis 5, wobei die Metallfasern in manchen oder allen Bündeln miteinander verdreht sind.

**8.** Garn nach einem der Ansprüche 1 bis 7, wobei die Metallfasern einen Kupferkern und einen Edelstahlmantel umfassen.

**9.** Garn nach einem der Ansprüche 1 bis 8, wobei das Garn eine isolierende Beschichtung, wie etwa PTFE (Polytetrafluorethylen) aufweist.

**10.** Garn nach einem der Ansprüche 1 bis 9, wobei das Garn zusätzlich ein polymeres gestrecktes Element umfasst, wobei das polymere gestreckte Element mit dem einen oder den mehreren Metallfaserbündeln verdreht ist.

**11.** Heizelement, umfassend ein elektrisch leitfähiges Garn nach einem der Ansprüche 1 bis 10.

**12.** Verwendung eines elektrisch leitfähigen Garns nach einem der Ansprüche 1 bis 10 als Widerstandsheizelement in heizbaren textilen Anwendungen.

**13.** Verwendung eines elektrisch leitfahigen Garns nach Anspruch 12, wobei die heizbare textile Anwendung eine Autositzheizung ist.

**14.** Verwendung eines elektrisch leitfähigen Garns nach einem der Ansprüche 1 bis 10 als Anschlussleitung.


**Revendications**

**1.** Fil électriquement conducteur (100) comprenant un ou plusieurs faisceaux (110, 120, 130), chaque faisceau comprenant au moins trente fibres métalliques (140), lesdites fibres métalliques étant étirées seules ou étirées en faisceau, lesdites fibres métalliques (140) comprenant de l'acier inoxydable et un métal qui est électriquement plus conducteur que l'acier inoxydable, ledit fil (100) comprenant un nombre prédéterminé de torsions par mètre, **caractérisé en ce que** ledit nombre prédéterminé de torsions par mètre est inférieur à 80 par mètre et supérieur à 10 par mètre.

**2.** Fil selon la revendication 1, dans lequel le fil comprend deux faisceaux ou plus.

**3.** Fil selon une quelconque revendication précédente, dans lequel ledit métal qui est électriquement plus conducteur que l'acier inoxydable est du cuivre.

**4.** Fil selon la revendication 1, 2 ou 3 dans lequel ledit nombre prédéterminé de torsions est entre 30 torsions par mètre et 60 torsions par mètre.

**5.** Fil selon une quelconque revendication précédente, dans lequel le nombre de faisceaux multiplié par le nombre de fibres par faisceau est supérieur à 250.

**6.** Fil selon une quelconque revendication précédente, dans lequel lesdites fibres métalliques ne sont pas tordues dans certains faisceaux ou dans tous les faisceaux.

**7.** Fil selon une quelconque des revendications 1 à 5, dans lequel lesdites fibres métalliques sont tordues dans certains faisceaux ou dans tous lesdits faisceaux.

8. Fil selon une quelconque des revendications 1 à 7, dans lequel lesdites fibres métalliques comprennent une âme de cuivre et une gaine d'acier inoxydable.

9. Fil selon une quelconque des revendications 1 à 8, dans lequel ledit fil comporte un revêtement isolant tel que du PTFE (polytétrafluoroéthylene).

10. Fil selon une quelconque des revendications 1 à 9, dans lequel ledit fil comprend en outre un element allongé polymère, ledit element allongé polymère étant tordu avec ledit ou lesdits faisceaux de fibres métalliques.

11. Element de chauffage comprenant un fil électriquement conducteur selon une quelconque des revendications 1 à 10.

12. Utilisation d'un fil électriquement conducteur selon une quelconque des revendications 1 à 10 en tant qu'éléments de chauffage par resistance dans des applications textiles pouvant être chauffées.

13. Utilisation d'un fil électriquement conducteur selon la revendication 12, dans laquelle ladite application textile pouvant être chauffée est un chauffage de siege de voiture.

14. Utilisation d'un fil électriquement conducteur selon une quelconque des revendications 1 à 10 dans un fil de connexion.

100

110

120

140

130

Fig. 1

A    B

L    L

Fig. 2a

Fig. 2b

FL

25    50    75    100   125   150   175    N

Fig. 3

500

513         513

511

510

512

Fig. 4

**EP 2 300 649 B1**

**Patent documents cited in the description**

- US 3379000 A
- US 3394213 A
- US 2050298 A
- US 3277564 A
- US 2004147193 A
- EP 1362941 A
- JP 5177243 A
- WO 2006120045 A